# EUROPÄISCHE PATENTSCHRIFT

(11) **EP 2 235 696 B1**
(45) Veröffentlichungstag und Bekanntmachung des Hinweises auf die Patenterteilung: **15.08.2012**
(21) Anmeldenummer: 09702151.3
(22) Anmeldetag: 15.01.2009
(51) Int. Cl.: G07F 7/06

(54) **EINKAUFSWAGEN MIT SCHIEBEGRIFF**
SHOPPING CART HAVING SLIDING HANDLE
CHARIOT DE SUPERMARCHÉ À POIGNÉE COULISSANTE

(30) Priorität: 15.01.2008 DE 202008000606 U
(43) Veröffentlichungstag der Anmeldung: 06.10.2010
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/DE2009/000035
(87) Internationale Veröffentlichungsnummer: WO 2009/089824

(56) Entgegenhaltungen:
- EP-A- 0 844 592
- WO-A-03/059715
- DE-A1- 4 235 473
- DE-A1- 19 734 865
- DE-U1- 9 308 648
- FR-A- 2 733 197

## Beschreibung

### Technisches Gebiet

Die Erfindung betrifft einen Einkaufswagen mit Schiebegriff, der modular einsetzbare Funktionselemente aufweist.

### Stand der Technik

Ein Schiebegriff mit Funktionselementen ist aus der EP 0537404 BI bekannt. Der dortige Schiebegriff besitzt als Funktionselemente eine Werbefläche und eine **Münzschlossvorrichtung.**

Die im wesentlichen waagrechte Werbefläche befindet sich auf seiner Oberseite. Der Münzschlitz der Münzschlossvorrichtung befindet sich an der senkrecht stehenden Vorderseite des Schiebegriffes. Das WO 03/059715 A2 zeigt einen Schiebegriff, an dessen Außenseite ein Münzchloss befestigt ist.

Es ist vorteilhaft für die Lesbarkeit der Werbefläche, wenn diese etwas in Richtung des Benutzers des Einkaufswagens geneigt ist. Bei der bekannten Vorrichtung ist ein Neigen der Werbefläche erreichbar durch das Neigen des gesamten Schiebegriffes. Hierdurch würde die Vorderseite des Schiebegriffes aber nicht mehr senkrecht stehen, wodurch sich die Münze nicht mehr so bequem in den Münzschlitz der Münzschlossvorrichtung einführen lässt.

### Offenbarung der Erfindung

### Technische Aufgabe

Es ist Aufgabe der Erfindung einen Einkaufswagen mit Schiebegriff zu schaffen, wobei der Schiebegriff neben dem Funktionselement der Werbefläche weitere Funktionselemente aufweist und diese weiteren Funktionselemente leicht und bequem bedienbar sind, auch wenn das als Werbefläche wirkende Funktionselement in Richtung des Benutzers geneigt ist.

### Technische Lösung

Die gestellte Aufgabe wird gelöst, indem die weiteren Funktionselemente in eine Ausnehmung des Schiebegriffes einsetzbar sind und die eingesetzten Funktionselemente aus der geneigten Ebene des Schiebegriffes, in welcher die Werbefläche liegt heransragen. Anspruch 1 offenbart die Erfindung Bevorzugte Ausführungsbeispiele sind offenbart in den Ansprüchen 2-9.

### Vorteilhafte Wirkungen

Hierdurch wird vorteilhaft bewirkt, dass die weiteren Funktionselemente bequem zugänglich sind. Beim dem als Münzschlossvorrichtung wirkenden Funktionselement der ist der Münzschlitz gut von schräg oben zugänglich und unterhalb des Münzschlitzes verbleibt noch ein Teil der geneigten Ebene, die als Handauflage beim Einstecken der Münze dienen kann.

Die weiteren Funktionselemente sind modular neben dem als Werbefläche wirkenden Funktionselement einsetzbar. Dies ermöglicht vorteilhaft eine individuelle flexible Gestaltung des Schiebegriffes. So ist es möglich beispielsweise anstatt des als Münzschlossvorrichtung wirkenden Funktionselements ein anderes Funktionselement in den Schiebegriff einzusetzen. Ein solches anderes Funktionselement kann beispielsweise eine Halterung für ein vom Nutzer des Einkaufswagens verwendetes elektronisches Gerät zum sogenannten "selfscanning" sein oder eine Lupe.

Auch ist es möglich zusätzlich zu dem als Werbefläche dienenden Funktionselement mehrere zusätzliche Funktionselemente in den Schiebegriff einzusetzen. Beispielsweise kann ein Funktionselement mit einer Lupe und ein Funktionselement für eine Münzschlossvorrichtung in den Schiebegriff eingesetzt werden.

### Kurze Beschreibung der Zeichnungen

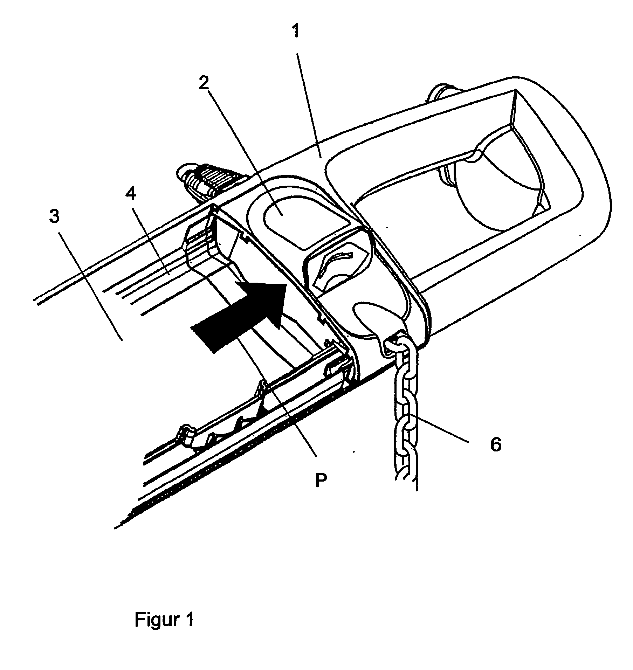

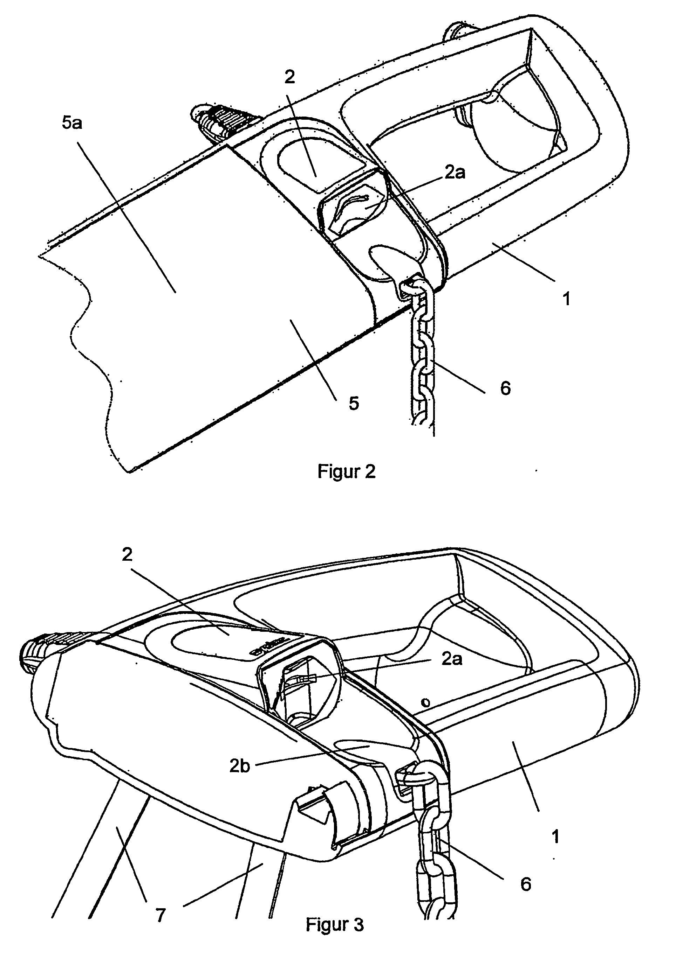

Die Figur 1 zeigt einen Teil des Schiebegriffs bei geöffneter Ausnehmung,die Figur 2 zeigt den Teil des Schiebegriffs bei geschlossener Ausnehmung und die Figur 3 zeigt den Schiebegriff mit einem Teil des Einkaufswagens.

Die Figur 1 erlaubt einen Blick in das Innere des Schiebegriffes 1. Die Münzschlossvorrichtung 2 ist ein eigenständiges modulartiges Funktionselement welches in den Schiebegriff 1 eingesetzt ist.

In einem Aufnahmeraum 3 des Schiebegriffs 1 sind Nuten 4 vorhanden, die mit entsprechenden Federn an der als Münzschlossvorrichtung 2 wirkenden Funktionseinheit korrespondieren.

Dieser Aufnahmeraum 3 ist bei einem fertig montierten Schiebegriff 1 von einem Deckel 5 verschlossen und für den Benutzer nicht sichtbar.

Bei der Montage der Münzschlossvorrichtung 2 wird diese in den Aufnahmeraum 3 eingesetzt, in die Nuten 4 eingeführt und anschließend in Richtung des Pfeiles P verschoben, bis sie eine Endposition erreicht hat. In dieser Endposition liegt die Münzschlossvorrichtung 2 direkt am Rand des Aufnahmeraums 3 an.

Die Münzschlossvorrichtung 2 ist so gestaltet, dass sich ein harmonischer Übergang zum Schiebegriff ergibt. Der Bereich um die im wesentlichen waagrechte Handauflage ist muldenförmig gestaltet und es ergibt sich ein fließender Übergang zum Deckel 5 und dem Rand des Aufnahmeraumes 3.

An der Münzschlossvorrichtung 2 ist eine Kette 6 befestigt. Am Ende der Kette 6 befindet sich ein in dieser Ansicht nicht gezeigter Schlüssel, der in bekannter Weise mit dem Schloss einer anderen Münzschlossvorrichtung zusammenwirkt. Es ergibt sich eine fertige Einheit, die schnell montierbar ist. Für die Montage der Münzschlossvorrichtung 2 ist in vorteilhafter Weise kein Werkzeug nötig.

Durch in dieser Ansicht nicht sichtbare Schnappnasen, die einrasten, sobald die Münzschlossvorrichtung 2 ihre Endposition erreicht hat, bleibt die Münzschlossvorrichtung 2 fixiert. Die Nuten verlaufen im Aufnahmeraum 3 parallel zur Achse des Schiebegriffes 1 und somit auch quer zu der üblichen Richtung, aus welcher über die Kette 6 eine Kraft auf die Münzschlossvorrichtung 2 wirkt. Daher wirkt die von der Kette 6 ausgehende Kraft in vorteilhafter Weise nicht auf die Schnappnasen. Zusätzlich kann die Münzschlossvorrichtung 2 auch mit einer Sicherungsschraube oder einem Sicherungsstift in dieser Endposition fixiert werden.

Die Figur 2 zeigt die Situation in welcher der Deckel 5 den Aufnahmeraum 3 verschließt.

Der Deckel 5 dient gleichzeitig als Werbefläche 5a. Die Werbung kann direkt aussen auf den Deckel 5 aufgebracht werden oder der Deckel 5 ist transparent ausgebildet, dann ist die Werbung an der Innenseite des Deckels anbringbar. Bei einem transparenten Deckel 5 sind an der Innenseite Führungsschienen vorhanden, in welche sich eine Werbefläche einschieben lässt.

Die Figur 3 zeigt den erfindungsgemäßen Schiebegriff 1 in geschnittener Darstellung der in bekannter Weise an den Grifftragarmen 7 eines Einkaufswagens montiert ist.

Der Schiebegriff 1 ist im montierten Zustand leicht schräg gestellt, wodurch die Werbefläche 5a vom Benutzer des Einkaufswagens besser sichtbar ist. Die Münzschlossvorrichtung 2 verläuft im wesentlichen waagrecht. Hierdurch ergibt sich, dass der Bereich der Münzschlossvorrichtung 2, in dem sich der Münzschlitz 2a befindet, etwas aus der Ebene mit der Werbefläche herausragt.

Unterhalb des Münzschlitzes 2a befindet sich eine im wesentlichen waagrecht verlaufende Fläche 2b, die dem Benutzer beim Einführen und Entnehmen der Münze als Handauflage dienen kann und so das Einführen und Entnehmen komfortabler macht.

Die Montage eines anderen modulartigen Funktionselements beispielsweise einer Lupe oder einem Halter für einen vom Nutzer des Einkaufswagens bedienbaren Scanner erfolgt auf die gleiche Art und Weise.

Auch ist es möglich mehrere modulartige Funktionselemente in den Aufnahmeraum 3 einzusetzen. Die modulartigen Funktionselemente können dann getrennt voneinander an den gegenüberliegenden Rändern des Aufnahmeraumes 3 anliegen und der Deckel 5 verschließt dann den dazwischen verbleibenden Teil des Aufnahmeraums 3.

Die einzelnen Funktionselemente sind in die Gesamtform des Schiebegriffes integriert und ragen soweit aus der Ebene, in welcher sich die Fläche 5a befindet heraus, dass eine gute Bedienbarkeit der Funktionselemente erfüllt ist.

### Gewerbliche Anwendbarkeit

Die Erfindung ist gewerblich anwendbar bei jeder Art von Einkaufswagen, der auf Pfandbasis den Kunden zur Verfügung gestellt wird.

## Patentansprüche

1. Einkaufswagen mit Schiebegriff, in den Funktionselemente modular einsetzbar sind, wobei der Schiebegriff (1) eine geneigte Fläche (5a) aufweist, an der Werbung anbringbar ist, wobei der Schiebegriff (1) einen Aufnahmeraum (3) für Funktionselemente (2) aufweist und die Funktionselemente (2) wieder entfernbar im Aufnahmeraum (3) gehalten werden, wobei ein Funktionselement (2) eine Münzschlossvorrichtung (2) ist, und wobei die in den Aufnahmeraum (3) eingesetzte Münzschlossvorrichtung (2) aus der Ebene herausragt, in welcher sich die geneigte Fläche befindet,
**dadurch gekennzeichnet,**
**dass** in dem Aufnahmeraum (3) Nuten (4) vorhanden sind, in die das in den Aufnahmeraum (3) eingesetzte Funktionselement (2) eingeführt ist, und dass die Münzschlossvorrichtung (2) eine im wesentlichen waagrechte Handauflage (2b) aufweist, die unterhalb eines Münzschlitzes (2a) der Münzschlossvorrichtung (2) angeordnet ist.

2. Einkaufswagen mit Schiebegriff nach Anspruch 1, **dadurch gekennzeichnet, dass** dass der Bereich um die im wesentlichen waagrechte Handauflage (2b) muldenförmig ausgebildet ist.

3. Einkaufswagen mit Schiebegriff nach Anspruch 1 oder 2, **dadurch gekennzeichnet, dass** der Schiebegriff im montierten Zustand leicht schräg gestellt ist und dass die in den Aufnahmeraum (3) eingesetzte Münschlossvorrichtung (2) im wesentlichen waagrecht verläuft, so dass und dass ein Teil der geneigten Fläche unterhalb eines Münzschlitzes (2a) der Münzschlossvorrichtung (2) verläuft.

4. Einkaufswagen mit Schiebegriff nach einem der vorherigen Ansprüche **dadurch gekennzeichnet, dass** ein Bereich der Münzschlossvorrichtung (2), in welchem sich der Münzschlitz (2a) befindet, aus der Ebene, in welcher sich die geneigten Fläche (5a) befindet, herausragt.

5. Einkaufswagen mit Schiebegriff nach einem der vorherigen Ansprüche, **dadurch gekennzeichnet, dass** das Funktionselement (2) in seiner Endposition durch Schnappnasen fixiert am Rand des Aufnahmeraums (3) anliegt.

6. Einkaufswagen mit Schiebegriff nach einem der vorherigen Ansprüche, **dadurch gekennzeichnet, dass** die im Aufnahmeraum (3) vorhandenen Nuten (4) parallel zur Achse des Schiebegriffs (1) verlaufen.

7. Einkaufswagen mit Schiebegriff nach nach einem der vorherigen Ansprüche, **dadurch gekennzeichnet, dass** ein Funktionselement eine Halterung für einen vom Kunden bedienbaren Warenscanner ist.

8. Einkaufswagen mit Schiebegriff nach einem der vorherigen Ansprüche, **dadurch gekennzeichnet, dass** das in die Nuten (4) eingesetzte Funktionselement (2) in eine Endposition verschiebbar ist und dass der Aufnahmeraum bei einem fertig montierten Schiebegriff von einem Deckel (5) verschlossen ist, wobei der Deckel (5) die geneigte Fläche (5a) bildet.

9. Einkaufswagen mit Shiebegriff nach einem der vorherigen Ansprüche, **dadurch gekennzeichnet, dass** ein zumindest ein weiteres Funktionselement in den Funktionsraum (3) einsetzbar ist.

10. Einkaufswagen mit Shiebegriff nach Anspruch 9, **dadurch gekennzeichnet, dass** die Funktionselemente an gegenüberliegenden Rändern des Aufnahmeraums (3) anliegen und dass der Deckel (5) den zwischen den Funktionselementen (2) verbleibenden Teil des Aufnahmeraums (3) verschließt.

## Claims

1. A shopping cart comprising a pushing handle, into which functional elements can be inserted in a modular manner, wherein the pushing handle (1) comprises an inclined surface (5a), to which advertisement can be attached, wherein the pushing handle (1) comprises an accommodating space (3) for functional elements (2) and the functional elements (2) are held in the accommodating space (3) so as to be capable of being removed again, wherein one functional element (2) is a coin lock device (2), and wherein the coin lock device (2), which is inserted into the accommodating space (3), protrudes out of the plane, in which the inclined surface is located,
**characterized in**
**that** grooves (4), into which the functional element (2), which is inserted into the accommodating space (3), is introduced, are present in the accommodating space (3), and that the coin lock device (2) comprises a substantially horizontal hand rest (2b), which is arranged below a coin slot (2a) of the coin lock device (2).

2. The shopping cart comprising the pushing handle according to claim 1, **characterized in that** the area around the substantially horizontal hand rest (2b) is embodied in a recess-shaped manner.

3. The shopping cart comprising the pushing handle according to claim 1 or 2, **characterized in that** the pushing handle is slightly inclined in the assembled state and that the coin lock device (2), which is inserted into the accommodating space (3), runs substantially horizontally, so that and that a part of the inclined surface runs below a coin slot (2a) of the coin lock device (2).

4. The shopping cart comprising the pushing handle according to one of the preceding claims, **characterized in that** an area of the coin lock device (2), in which the coin slot (2a) is located, protrudes out of the plane, in which the inclined surface (5a) is located.

5. The shopping cart comprising the pushing handle according to one of the preceding claims, **characterized in that**, in its end position, the functional element (2) rests against the edge of the accommodating space (3) so as to be fixed thereto by means of catches.

6. The shopping cart comprising the pushing handle according to one of the preceding claims, **characterized in that** the grooves (4), which are present in the accommodating space (3), run parallel to the axis of the pushing handle (1).

7. The shopping cart comprising the pushing handle according to one of the preceding claims, **characterized in that** one functional element is a holder for a product scanner, which can be operated by the customer.

8. The shopping cart comprising the pushing handle according to one of the preceding claims, **characterized in that** the functional element (2), which is inserted into the grooves (4), can be displaced into an end position, and that, in the case of a fully assembled pushing handle, the accommodating space is closed by a cover (5), wherein the cover (5) forms the inclined surface (5a).

9. The shopping cart comprising the pushing handle according to one of the preceding claims, **characterized in that** at least one further functional element can be inserted into the functional space (3).

10. The shopping cart comprising the pushing handle according to claim 9, **characterized in that** the functional elements rest against opposite edges of the accommodating space (3) and that the cover (5) closes the part of the accommodating space (3), which remains between the functional elements (2).

## Revendications

1. Chariot d'achat avec poignée coulissante, dans lequel des éléments fonctionnels peuvent être insérés de façon modulaire, sur lequel la poignée coulissante (1) présente une surface (5a) inclinée, sur laquelle peut être placée de la publicité, la poignée coulissante (1) présentant un espace de logement (3) pour des éléments fonctionnels (2) et les éléments fonctionnels (2) sont maintenus à nouveau de façon amovible dans l'espace de logement (3), chariot sur lequel un dispositif de serrure à monnaie (2) est un élément fonctionnel (2), et sur lequel le dispositif de serrure à monnaie (2) inséré dans l'espace de logement (3) dépasse du plan dans lequel se trouve la surface inclinée,
**caractérisé en ce que**
des rainures (4) sont présentes dans l'espace de logement (3), rainures dans lesquelles l'élément fonctionnel (2) inséré dans l'espace de logement (3) est introduit, et **en ce que** le dispositif de serrure à monnaie (2) présente un support de main (2b) sensiblement horizontal, qui est disposé au-dessous d'une fente à monnaie (2a) du dispositif de serrure à monnaie (2).

2. Chariot d'achat avec poignée coulissante selon la revendication 1, **caractérisé en ce que** la zone autour du support de main (2b) sensiblement horizontal est conçu en forme de cavité.

3. Chariot d'achat avec poignée coulissante selon la revendication 1 ou 2, **caractérisé en ce que** la poignée coulissante est placée légèrement inclinée dans l'état monté et **en ce que** le dispositif de serrure à monnaie (2) inséré dans l'espace de logement (3) est agencé sensiblement horizontalement, de telle sorte qu'une partie de la surface inclinée est disposée au-dessous d'une fente à monnaie (2a) du dispositif de serrure à monnaie (2).

4. Chariot d'achat avec poignée coulissante selon l'une des revendications précédentes, **caractérisé en ce qu'**une zone du dispositif de serrure à monnaie (2), dans laquelle se trouve la fente à monnaie (2a), dépasse du plan dans laquelle se trouve la surface (5a) inclinée.

5. Chariot d'achat avec poignée coulissante selon l'une des revendications précédentes selon l'une des revendications précédentes, **caractérisé en ce que** l'élément fonctionnel (2) s'applique dans sa position finale, fixée par des ergots d'encliquetage, sur le bord de l'espace de logement (3).

6. Chariot d'achat avec poignée coulissante selon l'une des revendications précédentes, **caractérisé en ce que** les rainures (4) présentes dans l'espace de logement (3) sont agencées parallèlement à l'axe de la poignée coulissante (1).

7. Chariot d'achat avec poignée coulissante selon l'une des revendications précédentes, **caractérisé en ce qu'**un élément fonctionnel est un support pour un scanner de marchandises pouvant être utilisé par le client.

8. Chariot d'achat avec poignée coulissante selon l'une des revendications précédentes, **caractérisé en ce que** l'élément fonctionnel (2) inséré dans les rainures (4) peut coulisser dans une position finale et **en ce que** l'espace de logement est fermé par un couvercle (5) dans le cas d'une poignée coulissante déjà montée, le couvercle (5) formant la surface (5a) inclinée.

9. Chariot d'achat avec poignée coulissante selon l'une des revendications précédentes, **caractérisé en ce qu'**au moins un autre élément fonctionnel peut être inséré dans l'espace de fonction (3).

10. Chariot d'achat avec poignée coulissante selon la revendication 9, **caractérisé en ce que** les éléments fonctionnels s'appliquent sur des bords opposés de l'espace de logement (3) et **en ce que** le couvercle (5) ferme la partie, restant entre les éléments fonctionnels (2), de l'espace de logement (3).
